# EUROPEAN PATENT SPECIFICATION

(11) **EP 3 016 184 B1**
(45) Date of publication and mention of the grant of the patent: **10.04.2019**
(21) Application number: 15192169.9
(22) Date of filing: 29.10.2015
(51) Int. Cl.: H01M 4/36, H01M 4/505, H01M 4/525, C01G 53/00, H01M 4/131, H01M 10/052, H01M 10/42, H01M 4/02

(54) **POSITIVE ELECTRODE ACTIVE MATERIAL, AND LITHIUM SECONDARY BATTERY INCLUDING THE SAME**
POSITIVELEKTRODEN-AKTIVMATERIAL UND LITHIUM-SEKUNDÄRBATTERIE DAMIT
MATÉRIAU ACTIF D'ÉLECTRODE POSITIVE ET BATTERIE SECONDAIRE LE COMPRENANT

(30) Priority: 29.10.2014 KR 20140148419
(43) Date of publication of application: 04.05.2016
(73) Proprietor: IUCF-HYU (Industry-University Cooperation Foundation Hanyang University), Seoul 133-791 (KR)
(72) Inventor: Park, Gang-Jun, Seoul (KR); Sun, Yang-Kook, Seoul (KR)
(74) Representative: J A Kemp

(56) References cited:
- WO-A1-2013/002457
- WO-A1-2013/147537
- US-A1- 2012 080 649
- LEE EUNG-JU ET AL: "Effect of outer layer thickness on full concentration gradient layered cathode material for lithium-ion batteries", JOURNAL OF POWER SOURCES, ELSEVIER SA, CH, vol. 273, 2 October 2014 (2014-10-02), pages 663-669, XP029092216, ISSN: 0378-7753, DOI: 10.1016/J.JPOWSOUR.2014.09.161
- HYUNG-JOO NOH ET AL: "High-Energy Layered Oxide Cathodes with Thin Shells for Improved Surface Stability", CHEMISTRY OF MATERIALS, vol. 26, no. 20, 6 October 2014 (2014-10-06), pages 5973-5979, XP055284711, US ISSN: 0897-4756, DOI: 10.1021/cm502774u
- HYUNG-JOO NOH ET AL: "Cathode Material with Nanorod Structure-An Application for Advanced High-Energy and Safe Lithium Batteries", CHEMISTRY OF MATERIALS, vol. 25, no. 10, 28 May 2013 (2013-05-28), pages 2109-2115, XP055181288, ISSN: 0897-4756, DOI: 10.1021/cm4006772

## Description

### FIELD OF THE INVENTION

The present disclosure relates to a positive electrode active material and a lithium secondary battery comprising the same.

### BACKGROUND

The development of portable electronic devices such as a smart phone, an MP3 player, a tablet PC has led an explosive increase in demand for a secondary battery which can store electrical energy. In particular, the demand for a lithium secondary battery has increased in association with the advent of electric vehicles, medium to large energy storage systems, and portable devices which require a high energy density.

In order to cope with such an increase in demand for a lithium secondary battery, the research and development on the positive electrode active material used in a lithium secondary battery is in progress. For example, in Korea Patent Unexamined Publication No. 10-2014-0119621 (Application No. 10-2013-0150315), a secondary battery is disclosed which has a high voltage capacity and long cycle-life characteristics as a precursor that is for producing a positive electrode active material with an excess amount of lithium and represented by Ni_{α}Mn_{β}OP_{γ-δ}A_{δ}CO₃ (A is one or two or more selected from the group consisting of B, Al, Ga, Ti and In , α is from 0.05 to 0.4, and β is from 0.5 to 0.8, γ is from 0 to 0.4, and δ is from 0.001 to 0.1) is used and the kind and composition of the metal to be substituted in the precursor and the kind and amount of metal to be added to the precursor are controlled.

Lee Eung-Ju et al, Journal of Power Sources, 273, 663-669 describes the effect of outer layer thickness on full concentration gradient layered cathode material for lithium ion batteries. WO 2013/147537 describes a cathode active material for a lithium secondary battery. Hyung-Joo Noh et al, Chemistry of Materials, 25, 10, 5973-5979 describes high-energy layered oxide cathodes with thin shells for improved surface stability. WO 2013/002457 describes a positive electrode active material for a lithium battery. US 2012/080649 describes a process for preparing transition metal particles with a gradient in composition from the core of the particle to the outer layers. Hyung-Joo Noh et al, Chemistry of Materials, 25, 10, 2109-2115 describes a cathode material with a nano-rod structure.

### SUMMARY

The invention provides positive electrode active material comprising: a secondary particle comprising at least one primary particle, wherein the primary particle has an intermediate element, which intermediate element includes: a gradient portion which shows concentration gradient of a first metal; and a uniform portion which extends from an end of the gradient portion and shows constant concentration of the first metal; and wherein: each primary particle has an a-axis and the a-axis direction of the primary particles radiate from a core part of the secondary particle such that the primary particles have a rod shape; and the a-axis direction length of the primary particles increases going from the core part of the secondary particle to a shell part of the secondary particle.

In one embodiment the gradient portion and the uniform portion are in one body.

In one embodiment the secondary particle comprises: a core part; a shell part; a seed region adjacent to the core part; and a maintain region adjacent to the shell part, and the primary particle comprises: a seed element disposed in the seed region and having a concentration gradient of the first metal; and a maintain element disposed in the maintain region, which maintain element extends towards the shell part from the seed element and has a constant concentration of the first metal.

In one embodiment, the intermediate element is disposed between the seed element and the maintain element; the gradient portion is adjacent to the seed element; and the uniform portion is adjacent to the maintain element.

In one embodiment, the concentration of the first metal in the gradient portion decreases as it approaches the uniform portion.

The invention also provides a secondary battery comprising: the positive electrode active material according to the invention; a negative electrode disposed on the positive electrode; and an electrolyte between the positive electrode and the negative electrode.

### BRIEF DESCRIPTION OF THE DRAWINGS

The above and other objects and features of the present invention will become apparent from the following description of the invention taken in conjunction with the following accompanying drawings, which respectively show:
FIG. 1: a secondary battery including the positive electrode active material according to the present invention;
FIG. 2: a secondary particle of the positive electrode active material according to the present invention;
FIG. 3: a cross-section of secondary particle of the positive electrode active material in FIG. 2;
FIG. 4: a primary particle of the positive electrode active material according to the present invention;
FIG. 5a: a seed element in the primary particle of the positive electrode active material according to the present invention;
FIG. 5b: an intermediate element in the primary particle of the positive electrode active material according to the present invention;
FIG. 5c: a maintain element in the primary particle of the positive electrode active material according to the present invention;
FIGS. 6a and 6b: SEM images of the cross-section of the secondary particles in the positive electrode active which is manufactured in embodiments of the present invention;
FIGS. 7a and 7b: EPMA graphs of the cross-section of the primary particles in the positive electrode active which is manufactured in embodiments of the present invention;
FIG. 8a: a discharging capacity property graph of the secondary battery which includes the positive electrode active material according to the present invention;
FIG. 8b: a life time characteristic graph of the secondary battery which includes the positive electrode active material according to the present invention;
FIGS. 9a and 9b: thermal safety characteristic graphs of the secondary battery which includes the positive electrode active material according to the present invention; and
FIG. 10: a block diagram of the electric vehicle which have the secondary battery including the positive electrode active material according to the present invention.

### DETAILED DESCRIPTION OF THE EMBODIMENTS

The inventive concepts will now be described more fully hereinafter with reference to the accompanying drawings, in which exemplary embodiments of the inventive concepts are shown. The advantages and features of the inventive concepts and methods of achieving them will be apparent from the following exemplary embodiments that will be described in more detail with reference to the accompanying drawings.

As used herein, the singular terms "a," "an" and "the" are intended to include the plural forms as well, unless the context clearly indicates otherwise. As used herein, the term "and/or" includes any and all combinations of one or more of the associated listed items. It will be understood that when an element is referred to as being "connected" or "coupled" to another element, it may be directly connected or coupled to the other element or intervening elements may be present.

Similarly, it will be understood that when an element such as a layer, region or substrate is referred to as being "on" another element, it can be directly on the other element or intervening elements may be present. In contrast, the term "directly" means that there are no intervening elements. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

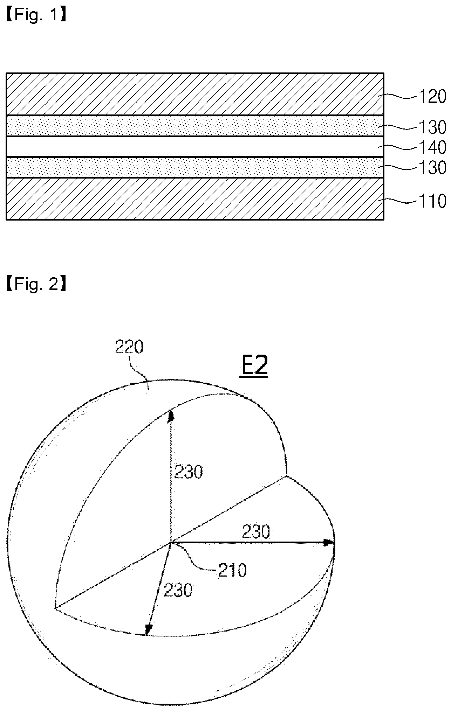

FIG. 1 is a drawing describing a secondary battery including the positive electrode active material according to the present invention. As shown in Fig. 1, a secondary battery according to the present invention may include a positive electrode 110, a negative electrode 120 facing the positive electrode 110, a membrane between the positive electrode 110 and the negative electrode 120, and an electrolyte 130 filled between the positive electrode 110 and the negative electrode 120.

The negative electrode 120 may include a negative electrode active material. For example, the negative electrode active material may include at least one of a carbon such as graphite or hard carbon, a metal such as Li, Na, Mg, Al, Si, In, Ti, Pb, Ga, Ge, Sn, Bi, Sb or an alloy thereof, silicon, silicon oxide, and Ti based oxide such as Li₄Ti₅O₁₂.

The membrane 140 may include at least one microporous film of polyolefin based resin, fluorine based resin, polyester based resin, polyacrylonitrile resin or cellulose material, and the microporous film coated by inorganic material such as ceramic. For example, the polyolefin based resin may include polyethylene, polypropylene or etc., the fluorine based resin may include polyvinylidenefluoride, polytetrafluoroethylene or etc., the polyester based resin may include polyethylene terephthalate, polybutylene terephthalate etc.

The electrolyte 130 may be impregnated in the membrane 140, the positive electrode 110 and/or the negative electrode 120. The electrolyte 130 may be gel polymer type electrolyte or liquid electrolyte. For example, the electrolyte 130 may be formed of adding a co-solvent including at least one of dimethyl carbonate (DC), ethyl methyl carbonate (EMC) etc. into a principle solvent including at least one of ethylene carbonate (EC) and propylene carbonate (PC), and dissolving a lithium salt therein. For example, the lithium salt may be at least one selected from lithium hexafluorophosphate (LiPF₆), lithium perchlorate (LiClO₄), lithium tetrafluoroborate (LiBF₄), lithium hexafluoroacetate (LiAsF₆), lihium bis-oxalatoborate (LiBOB), lithium trifluoromethanesulfonate (LiCF₃SO₃) and lithium tri(fluoromethanesulfonyl)imide (LiCF₃SO₃)

The positive electrode 110 may include a positive electrode active material. The positive electrode active material may include a primary particle and a secondary particle wherein the primary particle includes a seed element, an intermediate element and a maintain element, and the secondary particle is formed by gathering at least one of the primary particle. The positive electrode active material will be described below with reference to exemplary embodiments

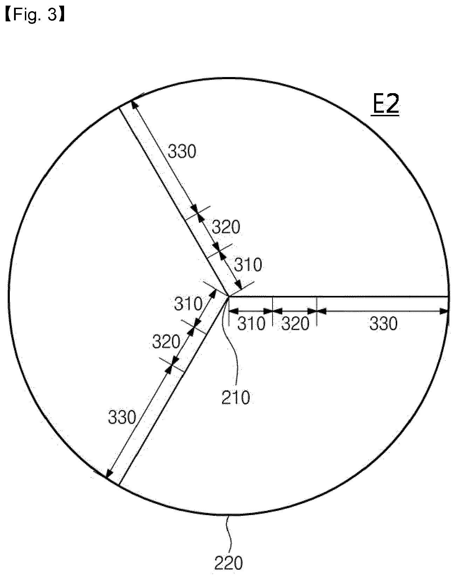

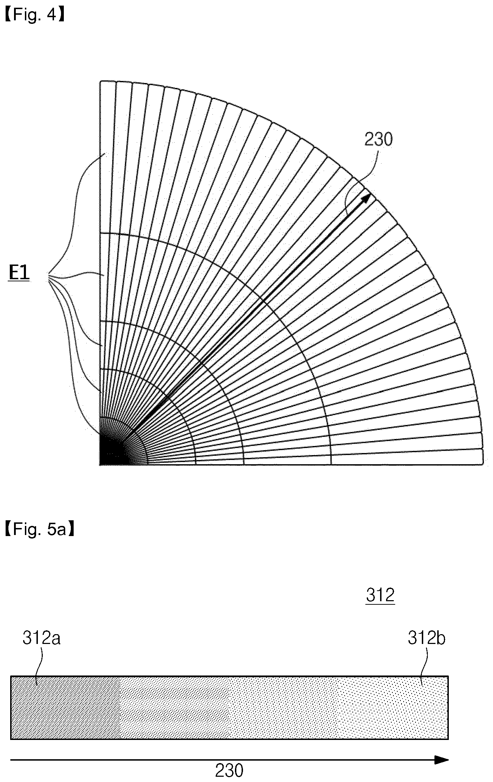

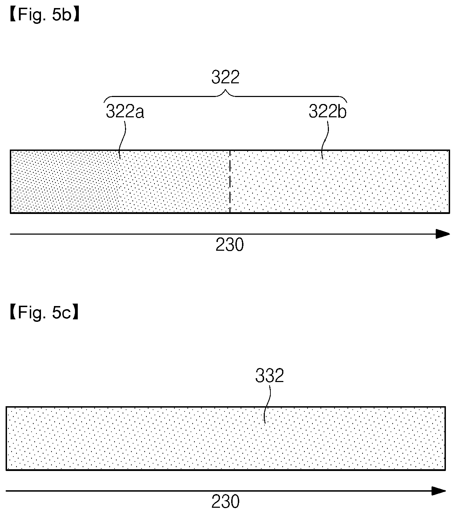

FIG. 2 is a drawing describing the secondary particle of the positive electrode active material according to the present invention, and Fig. 3 is a drawing describing a cross section of the secondary particle of the positive electrode active material shown in FIG. 2. FIG. 4 is a drawing describing the primary particle of the positive electrode active material according to the present invention, FIG. 5a is a drawing describing a seed element contained in the primary particle of the positive electrode active material according to the present invention, FIG. 5b is a drawing describing an intermediate element contained in the primary particle of the positive electrode active material according to the present invention and FIG. 5c is a drawing describing a maintain element contained in the primary particle of the positive electrode active material according to the present invention. As shown in FIGS. 2 through 4, and 5a through 5c, the positive electrode active material according to the present invention includes a primary particle E1 and a secondary particle E2 formed by gathering at least one of the primary particle E1.

The secondary particle E2 includes a core part 210 and a shell part 220. The core part 210 includes a core region of the secondary particle E2 and/or a portion of the secondary particle interior. The shell part 220 may be an exterior surface of the secondary particle E2.

Although sphere shaped secondary particle E2 was illustrated in FIGS. 2 and 3, the secondary particle E2 should not be limited to the drawing and cross-section thereof may have elliptic shape.

The secondary particle E2 may have a seed region 310, an intermediate region 320 and a maintain region 330 from the core part 210 toward the shell part 220. The seed region 310, the intermediate region 320 and the maintain region 330 are arranged in direction 320 of the shell part 220 from the core part 210. According to an embodiment, the seed region 310 may have length of at least 1 µm in the direction 230 of the shell part 220 from the core part 310.

At least one of the primary particles E1 composes the secondary particle E2. According to the present invention, the primary particle E1 has a rod shape extending toward the shell part 220 from the core part 210. That is to say, the primary particles E1 has a rod shape radiating in every direction from the core part 210.

A flow channel for metal ions (for example, lithium ions) and electrolyte (the electrolyte described with reference to FIG. 1) may be provided between the primary particles E1 having rod shape, in other words, between the primary particles E1 extending in the direction 230 toward the shell part 220 from the core part 210, thereby providing a secondary battery with high reliability and enhanced charge/discharge performance.

As shown in FIG. 5, the primary particle E1 may have the a-axis and the c-axis in crystal structure. Namely, the primary particle E1 may be hexagonal structure with the a-axis, the c-axis and axial angles of 90° and 120° from six crystal systems including triclinic, monoclinic, orthorhombic, tetragonal, hexagonal, isometric crystal structure. The a-axis direction length to c-axis direction length ratio may be increasing as going to the shell part 220 of the secondary particle E2 from the core part 210 of the secondary particle E2. According to the present invention, the a-axis direction of the primary particle E1 radiates from the core part 210 such that the primary particle has a rod shape.

The a-axis direction of the primary particle E1 radiates from the core part 210 such that the primary particle has rod shape, and the flow channel of the metal ion and the electrolyte may be provided on the surface of the primary particle in parallel with the a-axis. In other words, the flow channel may be provided in the direction to the shell part 220 from the core part 210. The flow channel of the metal ion and the electrolyte is provided between surfaces of the primary particle in parallel with the a-axis such that the secondary battery is enhanced in charging/discharging efficiency. If the a-axis direction length of the primary particle is increasing as going to the shell part 220 from the core part 210, the metal ion and the electrolyte can easily move to the core part 210 from the shell part 220 of the secondary particle E2 such that the positive electrode active material for the secondary battery with enhanced charging/discharging efficiency can be provided.

The primary particle E1 may include a seed element 312, an intermediate element 322 and a maintain element 332. The seed element 312, the intermediate element 322 and the maintain element 332 may be independent crystals, respectively. Therefore, the seed element 312, the intermediate element 322 and the maintain element 332 may be discriminated in SEM images.

The seed element 312, the intermediate element 322 and the maintain element 332 may be arranged in the seed region 310, the intermediate region 320 and the maintain region 330, respectively. In other words, the seed element 312 may be arranged near by the core part 210, the maintain element 332 may be arranged near by the shell part 220, and the intermediate element 322 may be arranged between the maintain element 332 and the seed element 312.

According to an embodiment, a plurality of the seed elements 312, the intermediate elements 322 and the maintain elements 332 may be arranged in the seed region 310, the intermediate region 320 and the maintain region 330, respectively.

The primary particle E1 including seed element 312, the intermediate element 322 and the maintain element 332 may be formed of a multiple metals including a first through a third metals. For example, the first metal may be nickel, the second metal may be manganese and the third metal may be cobalt.

According to an embodiment, the seed element 312 may be rod shape as shown in FIG. 5a. In other embodiment, the seed element 312 may be particle shape.

The first metal may show concentration gradient in the seed element 312. The first metal may show continuous concentration gradient. Specifically, concentration slop of the first metal may be continuous.

According to an embodiment, in the direction 230 from the core part 210 to the shell part 220, the concentration of the first metal in the seed element 312 may be declined, thereby an end 312a of the seed element 312 near by the core part 210 may be higher than the other end 312b of the seed element 312 near by the shell part 220 in the concentration of the first metal.

At least one of the second metal and the third metal may show concentration gradient in the seed element 312. According to an embodiment, in the direction 230 from the core part 210 to the shell part 220, concentration of the second metal may be increased in the seed element 312 and the concentration of the first metal may be constant. In another embodiment, concentrations of the second and third metals may be increased in the direction 230 from the core part 210 to the shell part 230.

The intermediate element 322 may have a gradient portion 332a where the first metal shows concentration gradient and a uniform portion 332b where the first metal shows constant concentration. The uniform portion 322b may extend from an end of the gradient portion 322a. The gradient portion 322a and the uniform portion 322b may be in one body. In other words, the gradient portion 322a and the uniform portion 322b may compose one crystal. Although the gradient portion 322a and the uniform portion 322b were discriminately shown in FIG. 5b, the gradient portion 322a and the uniform portion 322b may not be discriminated in a SEM image.

The gradient portion 322a may be adjacent to the seed element 321, and the uniform portion 322b may be adjacent to the maintain element 332. The gradient portion 322a may extend form the other end 321b of the seed element 312.

Concentration of the first metal in the gradient portion 322a may be declined as approaching to the uniform portion 322b. In other words, the first metal in the gradient portion 322a may be declined from the core part 210 to the shell part 220. Therefore, the gradient portion 322a near by the uniform portion 322a may have higher than the gradient portion 322a away from the uniform portion 322a in concentration of the first metal.

At least one of the second metal and the third metal may show concentration gradient in the gradient portion 322a. In an embodiment, according to the direction 230 from the core part 210 to the shell part 220, concentration of the second metal in the gradient portion 322a may be increased while the third metal in the gradient portion 322a shows constant concentration. In another embodiment, concentrations of the second metal and the third metal in the gradient portion 322a may be increased according to the direction 230 from the core part 210 to the shell part 220.

According to an embodiment, concentrations of the second metal and the third metal in the uniform portion 322a may be constant according to the direction 230 from the core part 210 to the shell part 220. Alternatively, at least one of the second metal and the third metal in the uniform portion 322a may show gradient concentration according to the direction 230 from the core part 210 to the shell part 220.

According to an embodiment, the uniform portion 322b may be longer than the gradient portion 322a. Alternatively, according to another embodiment, the uniform portion 322b may be shorter than the gradient portion 322a. According to still another embodiment, the uniform portion 322b and the gradient portion 322a may have substantially equal length. The length of the uniform portion 322b and the gradient portion 322a mean length from the core part 210 to the shell part 220.

The maintain element 332 may show constant concentration of the first metal according to the direction 230 from the core part 210 to the shell part 220. Concentration of the first metal of the maintain element 332 may be lower than concentration of the first metal of the seed element 312.

According to an embodiment, the concentration of the second metal and the third metal in the maintain element 332 may be constant according to the direction from the core part 210 to the shell part 220. Alternatively, according to another embodiment, at least one of the second metal and the third metal in the maintain element 332 may show concentration gradient according to the direction from the core part 332 to the shell part 220.

According to an embodiment, the maintain element 332 may be longer than the seed element 312 in the direction from the core part 210 to the shell part 220. Alternatively, according to an embodiment, length of the maintain element 332 may be equal or shorter than length of the seed element 312 in the direction from the core part 210 to the shell part 220.

According to an embodiment, the positive electrode active material may include the primary particle E1 and the secondary particle E2 formed by at least one of the primary particles E1, and the seed region where the seed element 312 with concentration gradient of the first metal may have length of at least 1 µm. Therefore, the intermediate element 322 and/or the maintain element 332 formed after the seed element 312 may have rod shape extending toward the shell part 220 from the core part 210, thereby providing flow channel into the interior of the secondary particle E2 for metal ions (for example, lithium ions) and electrolyte.

If the seed region 310 where the seed element 312 with concentration gradient of metal is arranged is shorter than 1 µm in the direction from the core part 210 to the shell part 220, the intermediate element 322 and/or the maintain element 332 formed after the seed element 312 may not be formed of rod shape. Thus, metal ions and electrolyte flow channel cannot be provided to the interior of the secondary particle 322, thereby the secondary battery may be declined in charge/discharge efficiency and life time characteristic.

As described above, however, according to an embodiment, the length of the seed region 310 may be at least 1 µm in the direction from the core part 210 to the shell part 220. Thus, the primary particles E1 including the maintain element 332 may have rod shape extending to radiate direction from the core part 210, thereby providing a secondary battery of high efficiency, high reliability and long life time.

According to an embodiment of the present invention, the seed element 312 of which concentration of the first metal (for example, nickel) is decreasing as going in the direction from the core part 210 to the shell part 220 may be formed followed by forming the rod shaped maintain element 332 of which concentration of the first metal (for example, nickel) is constant. Thus, the primary particle E1 including the seed element 312, the intermediate element 322 and the maintain element 332 may be formed as rod shape, spontaneously with providing a positive electrode active material with maximum concentration of the first metal in the secondary particle E2.

If the concentration of the first metal in the primary particle E1 is gradually decreasing as going to the shell part 220 from the core part 210 for manufacturing the primary particle E1 in the form of rod shape, the positive electrode active material including the primary particle E1 and the secondary particle E2 may be declined in characteristics caused by the first metal (for example, capacity and/or safety).

As described above, however, according to an embodiment, a positive electrode active material may be provided with maximum concentration of the first metal while the primary particle E1 maintains the rod shape. Therefore, a secondary battery may be provided with maximum characteristics caused by the first metal (for example, capacity and/or safety).

The above described embodiment of the present invention, it was described that the secondary particle E2 includes the intermediate region 320, the primary particle E1 includes the intermediate element which is arranged in the intermediate region 320, however, the intermediate region 320 and the intermediate element 322 may not exist in the secondary particle E2 and the primary particle E1.

The characteristics evaluation of the positive electrode active material and the secondary battery including the same according to embodiments of the present invention will be described below.

### Manufacturing of the positive electrode active material according to the embodiment.

Nickel manganese cobalt hydroxide was manufactured using nickel sulfate, manganese sulfate, cobalt sulfate according to the embodiment of the present invention. Lithium hydroxide was mixed in the nickel manganese cobalt hydroxide followed by heating and firing, thereby a positive electrode active material with a secondary particle including lithium nickel manganese cobalt was manufactured.

In the concrete, a primary particle and a secondary particle was manufactured with including a seed element of which concentrations of nickel, cobalt and manganese are gradient by varying mol ratio of the metal aqueous solution (nickel sulfate, manganese sulfate, cobalt sulfate) and a maintain element of which concentrations of nickel, cobalt and manganese are constant by maintaining mol ratio of the metal aqueous solution.

As shown in [Table 1], secondary particles were manufactured according to Example 1 through Example 9. The lengths of seed regions, where the seed element with decreasing nickel concentration was arranged, were 5.5 µm, 5 µm, 4.5 µm, 4 µm, 3 µm, 2.5 µm, 2 µm, 1.5 µm and 1 µm in Example 1 through Example 9, respectively. The lengths of maintain regions, where the maintain element with constant nickel concentration is arranged were 0.5 µm, 1 µm, 1.5 µm, 2 µm, 3 µm, 3.5 µm, 4 µm, 4.5 µm and 5 µm in Example 1 through Example 9, respectively.

**[Table 1]**

| class | length of seed region(µm) | length of maintain region(µm) |
|---|---|---|
| Example 1 | 5.5 | 0.5 |
| Example 2 | 5 | 1 |
| Example 3 | 4.5 | 1.5 |
| Example 4 | 4 | 2 |
| Example 5 | 3 | 3 |
| Example 6 | 2.5 | 3.5 |
| Example 7 | 2 | 4 |
| Example 8 | 1.5 | 4.5 |
| Example 9 | 1 | 5 |

### Comparison of SEM images

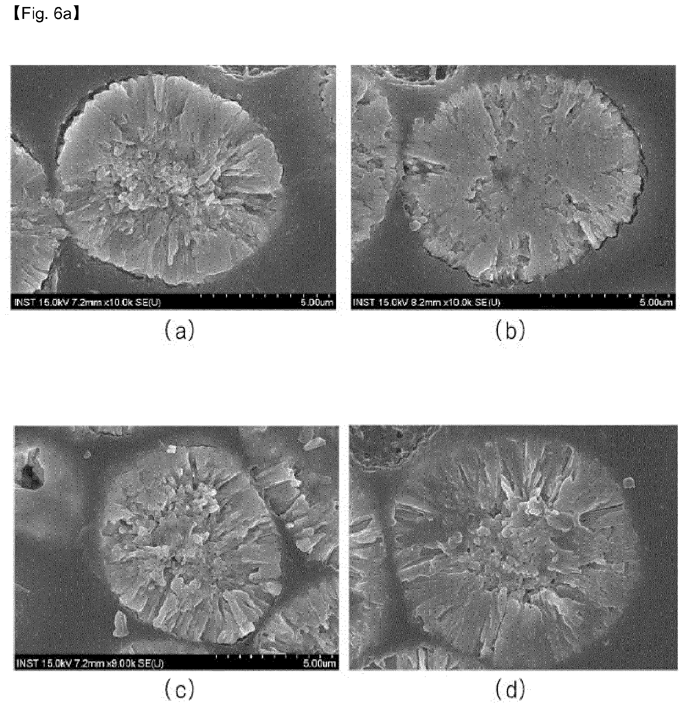

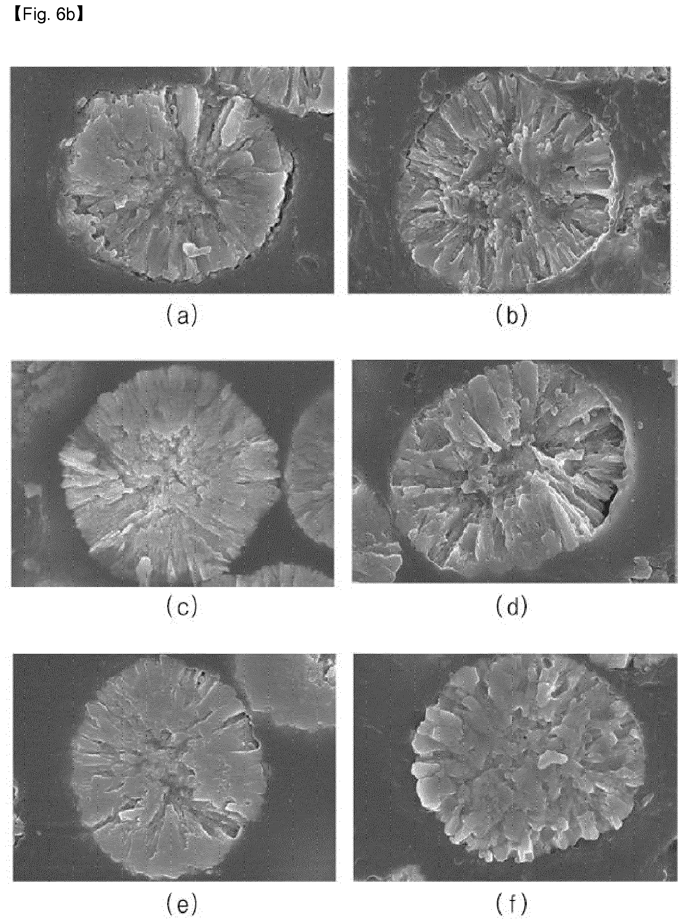

FIGS. 6a and 6b are SEM images of the secondary particle in the positive electrode active material manufactured in the embodiment of the present invention.

Referring to FIGS. 6a and 6b, (a) through (d) of FIG 6a respectively represent SEM images of cross-sections of the secondary particles which were manufactured in Example 1 through Example 4, (a) through (e) of FIG 6b respectively represent SEM images of cross-sections of the secondary particles which were manufactured in Example 5 through Example 9. FIG. 6b (f) presents a cross-section of bulk type positive electrode active material without rod shaped primary particle in Comparative Example according to the embodiment of the present invention.

As shown in FIGS. 6a and 6b, if the length of the seed region where the seed element is arranged is at least 1 µm, it may be confirmed that the primary particle was manufactured in the form of rod shape extending in the direction from the core part to the shell part of the secondary particle.

### Result of EPMA (Electron Probe Micro-Analysis)

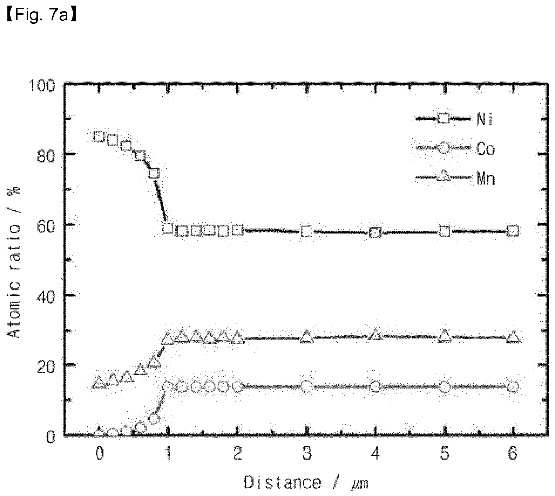

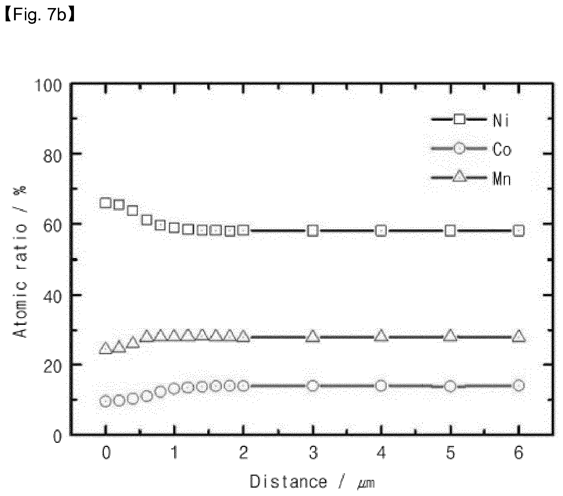

FIGS. 7a and 7b represent an EPMA graph of the primary particle in the positive electrode active material manufactured by the embodiment of the present invention.

Referring to FIGS. 7a and 7b, FIG. 7a is an EPMA result of nickel manganese cobalt hydroxide precursor of which length of the seed region with concentration gradient of nickel, cobalt and manganese according to Example 9 of the present invention is 1 µm, and FIG. 7b is an EPMA result of lithium nickel manganese cobalt secondary particle of which length of the seed region with concentration gradient of nickel, cobalt and manganese according to Example 9 of the present invention is 1 µm,

As shown in FIGS. 7a and 7b, nickel, cobalt and manganese have concentration gradient in the seed region of the nickel manganese cobalt hydroxide precursor and cobalt and manganese in the maintain region have constant concentration. If the secondary particle of lithium nickel manganese cobalt are formed by mixing lithium hydroxide followed by heating and firing, the nickel, cobalt, manganese are dispersed by heat treatment such that nickel, cobalt and manganese decline in concentration gradient. As a result, it can be confirmed that concentrations of nickel, cobalt and manganese in the secondary particle are changed after the heat treatment.

### Evaluating discharge capacity properties and life time characteristics

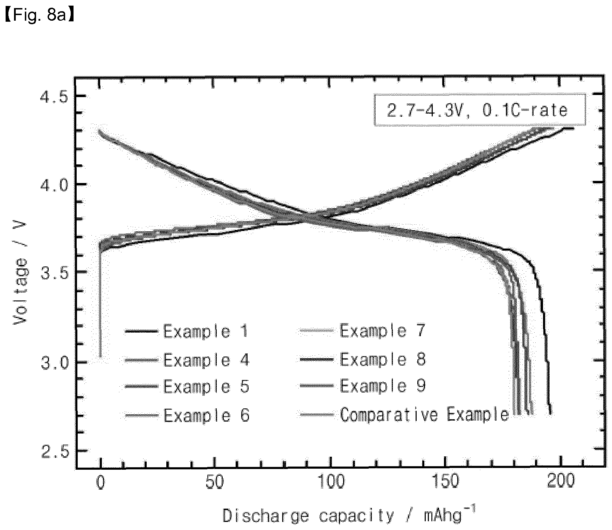

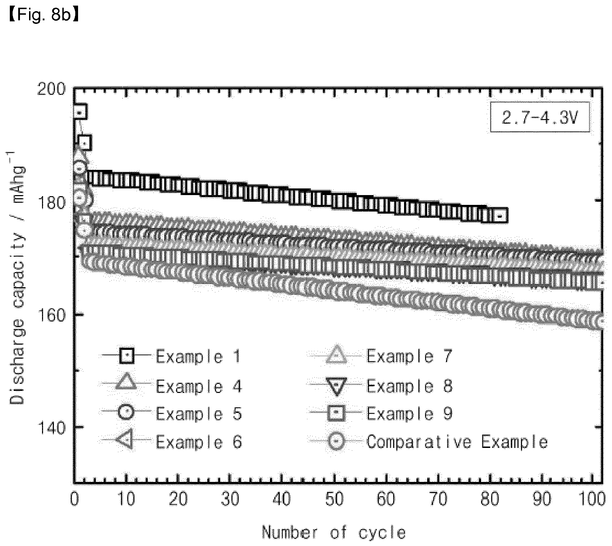

FIG. 8a is a graph representing discharge capacity properties of the secondary battery which includes the positive electrode active material according to the embodiment of the present invention, and FIG. 8b is a graph representing life time characteristics of the secondary battery which includes the positive electrode active material according to the embodiment of the present invention.

As shown in FIGS. 8a and 8b, discharge capacity properties and life time characteristics were evaluated to secondary batteries which include positive electrode active materials according to Examples 1, 4 through 9 and Comparative Example.

As shown in FIGS. 8a and 8b, the secondary battery formed by the positive electrode active material having rod shaped primary particle which include the seed element having concentration gradient of nickel, cobalt and manganese and the maintain element having constant concentration of nickel, cobalt and manganese is superior than the secondary battery formed by bulk shaped positive electrode active material without rod shaped primary particle in the discharge capacity property and the life time characteristic.

### Evaluating thermal safety

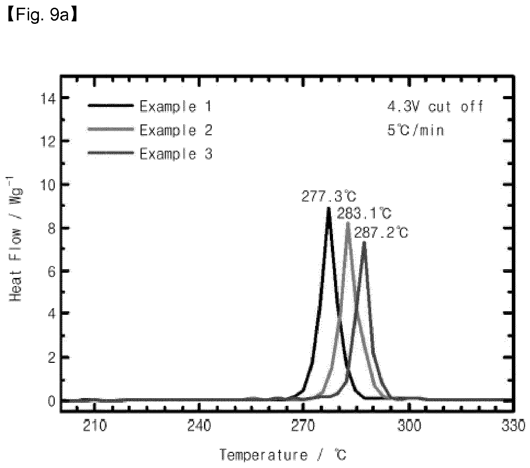

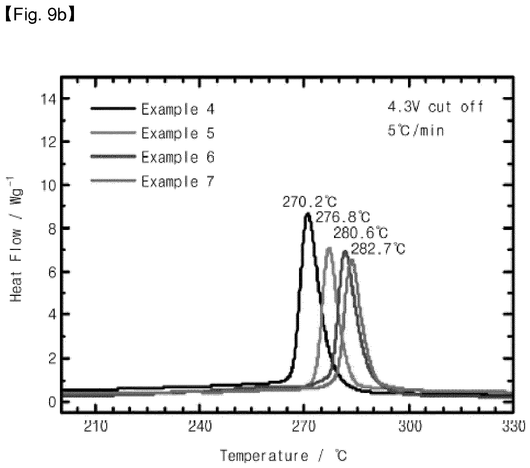

FIGS. 9a and 9b are graphs representing thermal safety of the secondary battery which includes the positive electrode active material according to the embodiment of the present invention.

As shown in FIGS. 9a and 9b, the thermal safeties were evaluated in condition of cut-off 4.3V, 5°C/min using DSC (Differential scanning calorimeter) to secondary batteries which include the positive electrode active material according to Examples 1 through 7 of the above described present invention, the secondary batteries according to Examples 1 through 7 respectively measured 277.3°C, 283.1°C, 287.2°C, 270.2°C, 276.8°C, 280.6°C and 282.7°C of DSC temperature, and 846.9 J/g, 801.6 J/g, 727.3 J/g, 843.1 J/g, 744.4 J/g, 717.8 J/g, and 694.2 J/g of calorie.

According to embodiments of the present invention, it can be confirmed that the efficient method for improving thermal safety of the secondary batteries is forming of the secondary battery using the positive electrode active material with rod shaped primary particle which includes the seed element having concentration gradient of nickel, cobalt and manganese and the maintain element having constant concentration of nickel, cobalt and manganese.

The above-described secondary battery according to the embodiments of the present invention may be applicable to the variety of applications, for example electric vehicles described hereinafter.

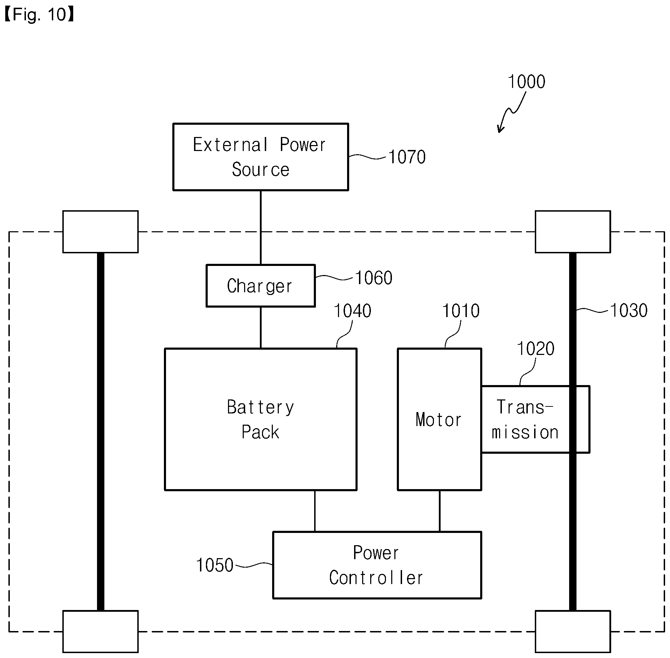

FIG. 10 is a block diagram of an electric vehicle which has the secondary battery including the positive electrode active material according to the embodiment of the present invention.

An electric vehicle 1000 according to an embodiment of the present invention may have at least one of a motor 1010, a transmission, an accelerator 1030, a battery pack 1040, a power controller 1050 and a charger 1060.

The motor 1010 can transform electric energy of the battery pack 1040 into kinetic energy. The motor 1010 may provide the transformed kinetic energy with the accelerator 1020 through the transmission 1020. The motor 1010 may be composed of a single motor or a plurality of motors. For example, the motor 1010 may be composed of a front-wheel motor supplying kinetic energy to a front-wheel accelerator and a rear-wheel motor supplying kinetic energy to a rear-wheel accelerator if the motor 1010 is composed of a plurality of motors.

The transmission 1020 may be located between the motor 1010 and the accelerator 1030, change the kinetic energy from the motor 1010 followed by supplying to the accelerator 1030 so as to be adequate for drive circumstance of drivers' demand.

The battery pack 1040 may store electric energy from the charger 1060 and supply the stored electric energy to the motor 1010. The battery pack 1040 may supply electric energy to the motor 1010 directly, or supply electric energy to the motor 1010 through the power controller 1050.

The battery pack 1040 may be formed of at least one battery cell. The battery cell may include the lithium air secondary battery, however, it is not limited to the above and the battery cell may include various secondary batteries such as a lithium based secondary battery. The battery cell may be referred to a discrete battery, and the battery pack may be referred to a battery group which is composed of discrete batteries interconnected each other in order to possess required voltage and/or capacity.

The power controller 1050 may control the battery pack 1040. Namely, the power controller 1050 may control at least one of voltage, current, waveform and etc. from the battery pack 1040 in accordance with demand of the motor 1010. Therefore, the power controller 1050 may include at least one of passive power device and an active power device.

The charger 1060 may receive power from an external power supplier 10710 as shown in FIG. 10 and supply to the battery pack 1040. The charger 1060 may generally control charging status, for example the charger 1060 may control on/off of charging and charging speed.

According to the embodiment of the present invention, the positive electrode active material includes a secondary particle composed of the primary particle and at least one of the primary particles. The secondary particle may include the seed region where the primary particle having concentration gradient of the first metal is disposed and the maintain region where the primary particle having constant concentration of the first metal is disposed. The seed region has length of 1µm. Therefore, the primary particle can be formed of rod shape extending toward shell part from the core part of the secondary particle while concentration of the first metal is maximized. Thereby, the secondary battery can be provided with high performance, high capacity and long life time.

## Claims

1. A positive electrode active material comprising:
a secondary particle (E2) comprising at least one primary particle (E1),
wherein the primary particle has an intermediate element (322), which intermediate element (322) includes:
a gradient portion (322a) which shows concentration gradient of a first metal; and
a uniform portion (322b) which extends from an end of the gradient portion and shows constant concentration of the first metal; and
wherein:
each primary particle (E1) has an a-axis and the a-axis direction of the primary particles radiates from a core part (210) of the secondary particle (E2) such that the primary particles (E1) have a rod shape; and
the a-axis direction length of the primary particles (E1) increases going from the core part (210) of the secondary particle (E2) to a shell part (220) of the secondary particle (E2).

2. The positive electrode active material of claim 1, wherein the gradient portion (332a) and the uniform portion (332b) are in one body.

3. The positive electrode active material of claim 1 or claim 2, wherein the secondary particle (E2) comprises: a core part (210); a shell part (220); a seed region (310) adjacent to the core part (210); and a maintain region (330) adjacent to the shell part (220), and
wherein the primary particle (E1) comprises:
a seed element (312) disposed in the seed region (310) and having a concentration gradient of the first metal; and
a maintain element (332) disposed in the maintain region (330), which maintain element (332) extends towards the shell part (220) from the seed element (312) and has a constant concentration of the first metal.

4. The positive electrode active material of any one of claims 1 to 3, wherein:
the intermediate element (322) is disposed between the seed element (312) and the maintain element (332);
the gradient portion (322a) is adjacent to the seed element; and
the uniform portion (322b) is adjacent to the maintain element.

5. The positive electrode active material of any one of claims 1 to 4, wherein the concentration of the first metal in the gradient portion (332a) decreases as it approaches the uniform portion (332b).

6. A secondary battery comprising:
the positive electrode active material according to any one of claims 1 to 5;
a negative electrode (120) disposed on the positive electrode (110); and
an electrolyte (130) between the positive electrode (110) and the negative electrode (120).

## Patentansprüche

1. Aktives Material der positiven Elektrode, umfassend:
ein Sekundärteilchen (E2), umfassend mindestens ein Primärteilchen (E1),
wobei das Primärteilchen ein Zwischenelement (322) hat, wobei das Zwischenelement (322) beinhaltet:
einen Gradientenabschnitt (322a), der einen Konzentrationsgradienten eines ersten Metalls zeigt; und
einen einheitlichen Abschnitt (322b), der sich von einem Ende des Gradientenabschnitts erstreckt und eine konstante Konzentration des ersten Metalls zeigt; und
wobei:
jedes Primärteilchen (E1) eine a-Achse hat und die a-Achsen-Richtung des Primärteilchens von einem Kernteil (210) des Sekundärteilchens (E2) ausgeht, sodass die Primärteilchen (E1) eine Stabform aufweisen; und
die Länge der a-Achsen-Richtung der Primärteilchen (E1) vom Kernteil (210) des Sekundärteilchens (E2) ausgehend zu einem Schalenteil (220) des Sekundärteilchens (E2) hin zunimmt.

2. Aktives Material der positiven Elektrode nach Anspruch 1, wobei der Gradientenabschnitt (322a) und der einheitliche Abschnitt (322b) in einem Körper sind.

3. Aktives Material der positiven Elektrode nach Anspruch 1 oder Anspruch 2, wobei das Sekundärteilchen (E2) umfasst: einen Kernteil (210); einen Schalenteil (220); eine Keimregion (310) neben dem Kernteil (210); und eine Beibehaltungsregion (330) neben dem Schalenteil (220), und
wobei das Primärteilchen (E1) umfasst:
ein Keimelement (312), angeordnet in der Keimregion (310) und mit einem Konzentrationsgradienten des ersten Metalls; und
ein Beibehaltungselement (332), angeordnet in der Beibehaltungsregion (330), wobei sich das Beibehaltungselement (332) vom Keimelement (312) in Richtung des Schalenteils (220) erstreckt und eine konstante Konzentration des ersten Metalls aufweist.

4. Aktives Material der positiven Elektrode nach einem der Ansprüche 1 bis 3, wobei:
das Zwischenelement (322) zwischen dem Keimelement (312) und der Beibehaltungsregion (332) angeordnet ist.
der Gradientenabschnitt (322a) neben dem Keimelement ist; und
der einheitliche Abschnitt (322b) neben dem Beibehaltungselement ist.

5. Aktives Material der positiven Elektrode nach einem der Ansprüche 1 bis 4, wobei die Konzentration des ersten Metalls im Gradientenabschnitt (332a) bei Annäherung an den einheitlichen Abschnitt (332b) abnimmt.

6. Sekundärbatterie, umfassend:
das aktive Material der positiven Elektrode nach einem der Ansprüche 1 bis 5;
eine negative Elektrode (120), angeordnet an der positiven Elektrode (110);
und
einen Elektrolyten (130) zwischen der positiven Elektrode (110) und der negativen Elektrode (120).

## Revendications

1. Matériau actif d'électrode positive comprenant :
une particule secondaire (E2) comprenant au moins une particule primaire (E1),
la particule primaire comportant un élément intermédiaire (322), lequel élément intermédiaire (322) comprenant :
une partie de gradient (322a) qui indique un gradient de concentration d'un premier métal ; et
une partie uniforme (322b) qui s'étend depuis une extrémité de la partie de gradient et indique une concentration constante du premier métal ; et
dans lequel :
chaque particule primaire (E1) présente un axe a et le sens de l'axe a des particules primaires rayonne depuis une partie centrale (210) de la particule secondaire (E2) de manière que les particules primaires (E1) présentent une forme de tige ; et
la longueur dans le sens de l'axe a des particules primaires (E1) augmente en allant de la partie centrale (210) de la particule secondaire (E2) vers une partie de coque (220) de la particule secondaire (E2).

2. Matériau actif d'électrode positive selon la revendication 1, dans lequel la partie de gradient (332a) et la partie uniforme (332b) sont dans un corps.

3. Matériau actif d'électrode positive selon la revendication 1 ou la revendication 2, dans lequel la particule secondaire (E2) comprend : une partie centrale (210) ; une partie de coque (220) ; une région de germe (310) adjacente à la partie centrale (210) et une région de maintien (330) adjacente à la partie de coque (220), et
la particule primaire (E1) comprenant :
un élément de germe (312) disposé dans la région de germe (310) et présentant un gradient de concentration du premier métal ; et
un élément de maintien (332) disposé dans la région de maintien (330), lequel élément de maintien (332) s'étendant vers la partie de coque (220) depuis l'élément de germe (312) et présentant une concentration constante du premier métal.

4. Matériau actif d'électrode positive selon l'une quelconque des revendications 1 à 3, dans lequel :
l'élément intermédiaire (322) est disposé entre l'élément de germe (312) et l'élément de maintien (332) ;
la partie de gradient (322a) est adjacente à l'élément de germe ; et
la partie uniforme (322b) est adjacente à l'élément de maintien.

5. Matériau actif d'électrode positive selon l'une quelconque des revendications 1 à 4, dans lequel la concentration du premier métal dans la partie de gradient (332a) diminue à mesure qu'elle s'approche de la partie uniforme (332b).

6. Batterie secondaire comprenant :
le matériau actif d'électrode positive selon l'une quelconque des revendications 1 à 5 ;
une électrode négative (120) disposée sur l'électrode positive (110) ; et
un électrolyte (130) entre l'électrode positive (110) et l'électrode négative (120).
